# EUROPEAN PATENT APPLICATION

(11) **EP 1 863 239 A1**
(43) Date of publication of application: **05.12.2007**
(21) Application number: 06775239.4
(22) Date of filing: 28.07.2006
(51) Int. Cl.: H04L 12/58

(54) **METHOD FOR REALIZING THE NOTIFICATION SERVICE, DISTRIBUTED WEB MANAGE SYSTEM AND NOTIFICATION SENDING SERVICE DEVICE**

(30) Priority: 20.08.2005 CN 200510091287
(71) Applicant: Huawei Technologies Co., Ltd., Longgang District Shenzhen Guangdong 518129 (CN)
(72) Inventor: YANG, Li, Guangdong 518129 (CN)
(74) Representative: Manitz, Finsterwald & Partner GbR
(86) International application number: PCT/CN2006/001893
(87) International publication number: WO 2007/022685

(57) **Abstract**

A method, a distributed network management system and a notification sending service device for implementing a Notification Service are disclosed. The method includes: setting a notification sending service unit in a distributed network management system; acquiring information regarding the notification sending service unit by a managing unit and a managed unit in the distributed network management system; subscribing, by the managing unit, to a notification from the managed unit; sending, by the managed unit, the notification subscribed by the managing unit to the managing unit through the notification sending service unit based on the information regarding the notification sending service unit. With the above solution, a Notification Service can be implemented using the exiting telecommunication network management interface in the distributed network management system.

## Description

### Field of the Invention

The present invention relates to network management techniques in the telecommunication network management field, and more particularly to a Notification Service method, a distributed network management system for implementing a Notification Service and managing the telecommunication network by the Web Service.

### Background of the Invention

At present, in the telecommunication network management field, many management operations in the Notification Service, such as subscribe, unsubscribe, getSubscriptionIds, getSubscriptionStatus, changSubscriptionFilter, suspendSubscription, resumeSubscription, and getNotificationCategories are published. Please refer to 3GPP TS 32.302 for details.

In practice, some existing standard Notification Services of a distributed network management system are used in general to implement notification sending services in the existing telecommunication network management system. For example, in a Common Object Request Broker Architecture (CORBA) distributed network management system, a CORBA Notification Service provides two modes for sending and receiving notification: a push mode and a pull mode.

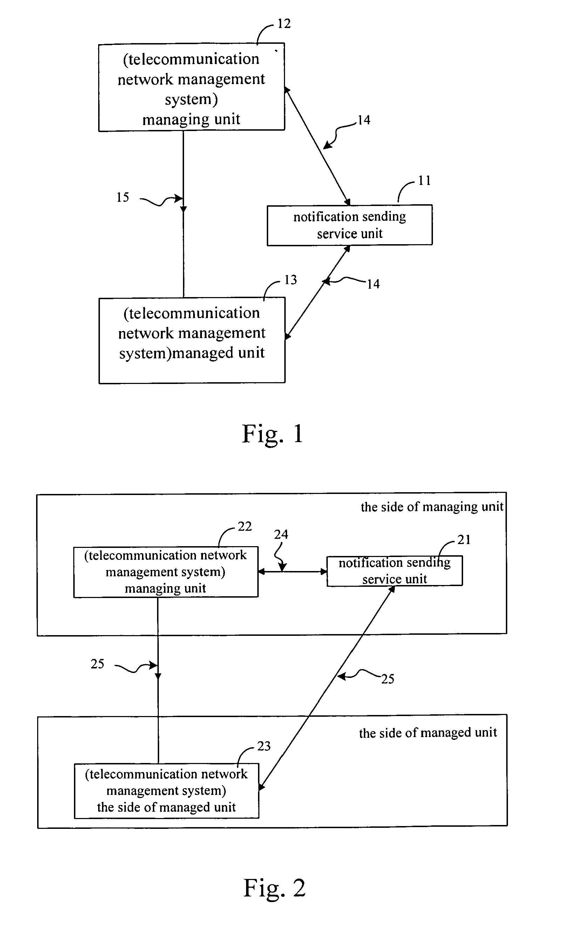

Figure 1 is a diagram illustrating the architecture for implementing a Notification Service in a CORBA distributed network management system. As shown in Figure 1, in the CORBA distributed network management system, a notification sending service 11 is set, and the notification sending service 11 is independent of a managing unit 12 and a managed unit 13 and communicates with the managing unit 12 and the managed unit 13 through a CORBA standard interface 14. The managing unit 12 and the managed unit 13 communicate through a telecommunication network management interface 15. The managing unit 12 subscribes to the managed unit 13 for a notification through the telecommunication network management interface 15, and may perform other notification operations by the telecommunication network management interface 15. The managed unit 13 sends the notification for which the managing unit 12 has subscribed, to the managing unit 12 through the notification sending service unit 11.

In the process of performing a notification sending service in the push mode, the managed unit 13 first sends a notification to the notification sending service unit 11 through the CORBA standard interface 14, and the notification is automatically routed to the notification sending service unit 11 because the address of the notification sending service unit 11 is set in a CORBA distributed network management system by default, and then the notification sending service unit 11 forwards the notification to the managing unit 12.

In the process of performing a notification sending service in the pull mode, the managing unit 12 sends a request for notifications to the notification sending service unit 11 through the CORBA standard interface 14, the request for notifications is automatically routed to the notification sending service unit 11 by the CORBA system, and then the notification sending service unit 11 acquires the notification from the managed unit 13 through the CORBA standard interface 14 and returns the notification to the managing unit 12.

However, with the evolution and development of a telecommunication network management system, the above CORBA distributed network management system is gradually replaced by an eXtensible Markup Language (XML) Web Service distributed network management system, which uses the XML Web Services as a construction platform of the distributed network management system to implement various services. In the telecommunication network management interface of the XML Web Service distributed network management system, the SOAP is adopted, and the Web Services Description Language (WSDL) is used as the description language with which the managed unit provides network management services to the outside. In other words, the telecommunication network management interface communicates based on the WSDL/SOAP.

At present, in the WSDL of the XML Web Service, four communication primitives supported by a service endpoint are given:
a One-way communication primitive: an endpoint receives a message;
a Request-response communication primitive: an endpoint receives a message and sends related messages;
a Solicit-response communication primitive: an endpoint sends a message and receives related messages; and
a Notification communication primitive: an endpoint sends a message.

At present, in the WSDL, the binding extension methods of the first two communication primitives, i.e., the One-way communication primitive and the Request-response communication primitive are disclosed. However, the binding extension methods of the latter two communication primitives, i.e., the Solicit-response communication primitive and the Notification communication primitive, are not disclosed. The binding extension method of a communication primitive explains how to implement operations, such as operation messages, the formats of the messages and input parameters and output parameters, of the communication primitive through a transfer protocol (e.g., the HTTP) and an upper SOAP.

The notification communication primitive is needed for communication if a Notification Service is to be implemented in an XML Web Service distributed network management system.

However, the inventors find in the inventing process that a detailed implementation method of the Notification communication primitive has not yet been presented, in other words, the Notification communication primitive has no binding extension method. Existing notification sending service units, which can be used to forward notifications as agents in the current XML Web Service distributed network management system, are not compatible with each other, because the interfaces, the operating platforms or the programming languages of different notification sending service units may be different. Therefore, a Notification Service cannot yet be implemented in the current XML Web Service distributed network management system.

### Summary of the Invention

Embodiments of the present invention provide a method for implementing a Notification Service in a WSDL/SOAP- based XML Web Service distributed network management system.

Embodiments of the present invention also provide a distributed network management system and a notification sending service device for implementing a Notification Service in a WSDL/SOAP-based XML Web Service distributed network management system.

A method for implementing a Notification Service, applied to a distributed network management system managing telecommunication network management system by Web Service, includes:
setting a notification sending service unit in a distributed network management system;
informing a managing unit and a managed unit in the distributed network management system about information regarding the notification sending service unit;
subscribing, by the managing unit, to the managed unit for a notification; and
sending, by the managed unit, the notification to the managing unit through the notification sending service unit according to the information regarding the notification sending service unit.

Alternatively, the setting and informing includes:
setting the notification sending service unit on the side of or inside the managing unit in the distributed network management system, and setting the information regarding the notification sending service unit in the managing unit; and
sending, by the managing unit, a notification subscription request carrying the information regarding the notification sending service unit to the managed unit during the subscribing.

The sending, by the managed unit, the notification subscribed by the managing unit to the managing unit through the notification sending service unit includes:
sending, by the managed unit, the notification to the notification sending service unit in manner of a WSDL Request-response communication primitive, and
forwarding, by the notification sending service unit, the notification to the managing unit through an internal interface on the side of or inside the managing unit.

The sending by the managed unit the notification to the notification sending service unit in manner of the WSDL Request-response communication primitive includes:
in manner of WSDL Request-response communication primitive,taking the managed unit as a client and taking the notification sending service unit as a server;
sending, by the managed unit, a request carrying the notification to the notification sending service unit according to the information regarding the notification sending service unit, and
extracting, by the notification sending service unit, the notification from the request and returning a response to the managed unit.

Alternatively, the sending by the managed unit the notification to the managing unit through the notification sending service unit includes:
sending, by the managed unit, the notification to the notification sending service unit in manner of the WSDL One-way communication primitive, and
forwarding, by the notification sending service unit, the notification to the managing unit through an internal interface on the side of or inside the managing unit.

The sending, by the managed unit, the notification to the notification sending service unit in manner of the WSDL One-way communication primitive includes:
in manner of WSDL One-way communication primitive, taking the managed unit as a client and taking the notification sending service unit as a server;
sending, by the managed unit, a One-way message carrying the notification to the notification sending service unit according to the information regarding the notification sending service unit, and
extracting, by the notification sending service unit, the notification from the One-way message upon receiving the One-way message.

Alternatively, the setting and informing includes:
setting the notification sending service unit on the side of or inside the managed unit in the distributed network management system and setting the information regarding the notification sending service unit in the managed unit; and
sending, by the managed unit, upon receiving a notification subscription request from the managing unit, a notification subscription response carrying the information regarding the notification sending service unit to the managing unit.

The sending by the managed unit the notification to the managing unit through the notification sending service unit includes:
acquiring, by the notification sending service unit, the notification from the managed unit through an internal interface on the side of or inside the managed unit; and
acquiring, by the managing unit, the notification from the notification sending service unit in manner of the WSDL Request-response communication primitive.

The acquiring by the managing unit the notification from the notification sending service unit in manner of the WSDL Request-response communication primitive includes:
in manner of the WSDL Request-response communication primitive, taking the managing unit as a client and taking the notification sending service unit as a server;
sending, by the managing unit, a notification request to the notification sending service unit according to the information regarding the notification sending service unit acquired during the subscribing, and
returning, by the notification sending service unit, the notification acquired from the managed unit as the contents of a response to the managing unit.

Preferably, the information regarding the notification sending service unit includes:
an identifier of the notification sending service unit and an identifier of a Web Service description file of the notification sending service; and
the sending by the managed unit the notification to the managing unit through the notification sending service unit according to the information regarding the notification sending service unit includes:
   finding and accessing, by the managed unit, the Web Service description file according to the identifier of the Web Service description file, and acquiring Web Service description information from the Web Service description file; and
   sending, by the managed unit the notification to the managing unit through the notification sending service unit according to the identifier of the notification sending service unit and the Web Service description file.

Preferably, the information regarding the notification sending service unit includes: an identifier of the notification sending service unit and description information of the notification sending service unit.

The identifier of the notification sending service unit includes: the port address of the notification sending service.

A distributed network management system, managing telecommunication network management system by Web Service plane, including: at least one managing unit, at least one managed unit, wherein the managing unit and the managed unit communicate with each other via a telecommunication network management interface, the distributed network management system further includes:
at least one notification sending service unit which is set at the side of the managing unit or the side of the managed unit, configured to communicate with the managed unit or the managing unit at the opposite side via the telecommunication network management interface; receive a notification sent by the managed unit; forward the notification to the managing unit subscribing for the notification.

Alternatively, the notification sending service unit is set on the side of or inside the managing unit; the managed unit sends the notification to the notification sending service unit through the telecommunication network management interface, and the notification sending service unit forwards the notification to the managing unit through an internal interface on the side of or inside the managing unit.

The telecommunication network management interface between the managed unit and the notification sending service unit is: a telecommunication network management interface communicating in manner of WSDL Request-response communication primitive.

The telecommunication network management interface between the managed unit and the notification sending service unit is: a telecommunication network management interface communicating in manner of WSDL One-way communication primitive.

Alternatively, the notification sending service unit is set on the side of or inside the managed unit; the managing unit sends a notification request to the notification sending service unit through the telecommunication network management interface, and the notification sending service unit acquires the notification from the managed unit through an internal interface on the side of or inside the managed unit and returns the notification to the managing unit through the telecommunication network management interface.

The telecommunication network management interface between the managing unit and the notification sending service unit is: a telecommunication network management interface communicating in manner of WSDL Request-response communication primitive.

Preferably, the telecommunication network system includes one of: a third generation (3G) telecommunication network system, a Next Generation Network (NGN) telecommunication network system, and a World Interoperability for Microwave Access (WiMAX) telecommunication network system.
A notification sending service device, applied to a distributed network management system including at least one managing unit and at least one managed unit, includes: a receiving module, configured to receive a notification sent by the managed unit, and a forwarding module, configured to forward the notification to the managing unit which has subscribed to the managed unit for the notification.

In the XML Web Service distributed network management system and the Notification Service method disclosed by the embodiments of the present invention, a notification sending service unit is set in the network management system, and the notification sending service unit is set on the side of a managing unit or a managed unit, communicates with the managing unit or the managed unit of the same side through an internal interface and communicates with the managed unit or the managing unit of the other side through an existing telecommunication network management interface. The managing unit can subscribe to the managed unit for a notification and the notification can be transferred from the managed unit to the managing unit on the platform of the XML Web Service, in other words, a Notification Service can be realized, and particularly, a Notification Service which is unified and independent of the operating platform and the programming language, can be implemented.

In the process of sending a notification, the telecommunication network management interface between the managed unit and the notification sending service unit and the telecommunication network management interface between the managing unit and the notification sending service unit uses the existing binding extension method of the WSDL Request-response communication primitive or One-way communication primitive to communicate. Therefore, Notification Service can be implemented using the existing interface resources, and developing works of the binding extension of the Solicit-response communication primitive or the Notification communication primitive is not needed. Therefore, the workload is reduced and the efficiency is improved.

### Brief Description of the Drawings

Figure 1 is a diagram illustrating the architecture for implementing a Notification Service in a CORBA distributed network management system.
Figure 2 is a diagram illustrating the architecture of a WSDL/SOAP- based XML Web Service distributed network management system in accordance with an embodiment of the present invention.
Figure 3 is a flow chart illustrating the implementation of a Notification Service in a WSDL/SOAP- based XML Web Service distributed network management system in accordance with an embodiment of the present invention.
Figure 4 is a diagram illustrating the architecture of a WSDL/SOAP-based XML Web Service distributed network management system in accordance with an embodiment of the present invention.
Figure 5 is a flow chart illustrating the implementation of a Notification Service in a WSDL/SOAP- based XML Web Service distributed network management system in accordance with an embodiment of the present invention.

### Embodiments of the Invention

The present invention is further described as follows in detail with reference to the specific embodiments and the drawings.

According to an embodiment of the present invention, in a WSDL/SOAP- based XML Web Service distributed network management system managing the telecommunication network system, a notification sending service unit which is used to forward a notification as an agent and is independent of the operating platform and the programming language is set; information regarding the notification sending service unit is informed to a managing unit and a managed unit in the system; the managing unit subscribes to the managed unit for the notification; the managed unit determines the location of the notification sending service unit and the operation information for sending the notification according to the information regarding the notification sending service unit, and forwards the notification through the notification sending service unit to the managing unit which has subscribed to the managed unit for the notification.

At present, there are no standard communication interfaces between the managed unit and the notification sending service unit, and between the notification sending service unit and the managing unit, therefore, in an embodiment of the present invention, the notification sending service unit is set on the side of the managing unit or the managed unit, or set inside the managing unit or the managed unit, and the notification sending service unit communicates, through internal private interface, with the managing unit or the managed unit of the side on which the notification sending service unit is set, and communicates with the managed unit or the managing unit of the other side through an existing WSDL/SOAP-based telecommunication network management interface.

The methods in accordance with an embodiment of the present invention are applicable to the third generation (3G) telecommunication network system and other telecommunication network systems managed by the WSDL/SOAP-based XML Web Service distributed network management system, such as a Next Generation Network (NGN) telecommunication network system, and a World Interoperability for Microwave Access (WiMAX) telecommunication network system, etc. The applications in 3G telecommunication network system is taken as an example in accordance with an embodiment of the present invention.

The technical solution with the notification sending service unit being set on the side of the managing unit and the technical solution with the notification sending service unit being set on the side of the managed unit will be described respectively by the following embodiments.

Figure 2 shows a diagram illustrating the architecture of a WSDL/SOAP-based XML Web Service distributed network management system in accordance with an embodiment of the present invention. As shown in Figure 2, the XML Web Service distributed network management system includes a managing unit 22 and a managed unit 23, and a notification sending service unit 21 is set, the notification sending service unit 21 is located on the side of or inside the managing unit 22. The notification sending service unit 21 includes a receiving module and a forwarding module, and the receiving module is configured to receive a notification sent by the managed unit 23 and the forwarding module is configured to forward the notification to the managing unit 22 which has subscribed to the managed unit for the notification; the interface between the managing unit 22 and the notification sending service unit 21 is an internal interface 24 on the side of or inside the managing unit 22; the internal interface 24 may be implemented by any private interface which is appreciated to those skilled in the art; the interface between the managed unit 23 and the notification sending service unit 21 is a telecommunication network management interface 25 which is an improved one of the existing interface. In other words, the interface 25 is a WSDL/SOAP interface by the binding extension method of the WSDL Request-response communication primitive or One-way communication primitive for communication. In the embodiment, the managing unit 22 needs to send information regarding the notification sending service unit 21 to the managed unit 23, the information regarding the notification sending service unit 21 includes the identifier of the notification sending service unit 21 (e.g., the service port address of the notification sending service unit 21), and description information of the notification sending service, the description information includes service information of the notification sending service unit 21, interface binding information, the WSDL PortType name (i.e., port name), an operation list, and port messages, or includes also data definitions etc. The method of informing the managing unit and the managed unit about the information regarding the notification sending service unit includes: setting the information regarding the notification sending service unit 21 in the managing unit 22, and during the process of subscribing for a notification, the managing unit 22 sending a notification subscription request carrying the information regarding the notification sending service unit 21 to the managed unit 23, so that the information regarding the notification sending service unit 21 is acquired by the managed unit 23.

The description information of the notification sending service, i.e., the information recorded in a WSDL description file, needs to be set in advance in accordance with an embodiment of the present invention. In the interaction between two communicating sides, interaction information is verified according to the information in the WSDL description file. The description information of the notification sending service includes:
service information, i.e., information related to the Notification Service;
port binding information, i.e., the transfer protocol (e.g., the HTTP) to which a WSDL PortType is bound;
the WSDL PortType name, i.e., the name of the port composed of all the operations included in the Notification Service;
an operation list, i.e., the list of all the operations included in the WSDL PortType, such as subscribe, unsubscribe, getSubscriptionIds, getSubscriptionStatus, changSubscriptionFilter, suspendSubscription, resume Subscription, and getNotificationCategories; and
port messages, i.e., the information of specific operation messages in the specific binding transfer protocol and input and/or output parameters of the specific operation messages, in which port messages of the subscribing operation include a notification subscription request and a notification subscription response, and besides generic information, such as the identifier of the managing unit, the features of the notification subscribed, and valid subscription term, the input parameters of the notification subscription request should include the information regarding the notification sending service unit as well.

In the embodiment, one or more notification sending service unit 21 may be set and one or more service interfaces may be provided by each notification sending service unit 21 in practice. Each interface may be connected to one managed unit or one managing unit for communication.

The XML Web Service distributed network management system in accordance with the embodiment of the present invention is applicable to the Notification Service in the push mode. In other words, upon detecting an event, the managed unit 23 initially sends a notification to the notification sending service unit 21 according to the service port address of the notification sending service unit 21 and forwards the notification to the managing unit 22.

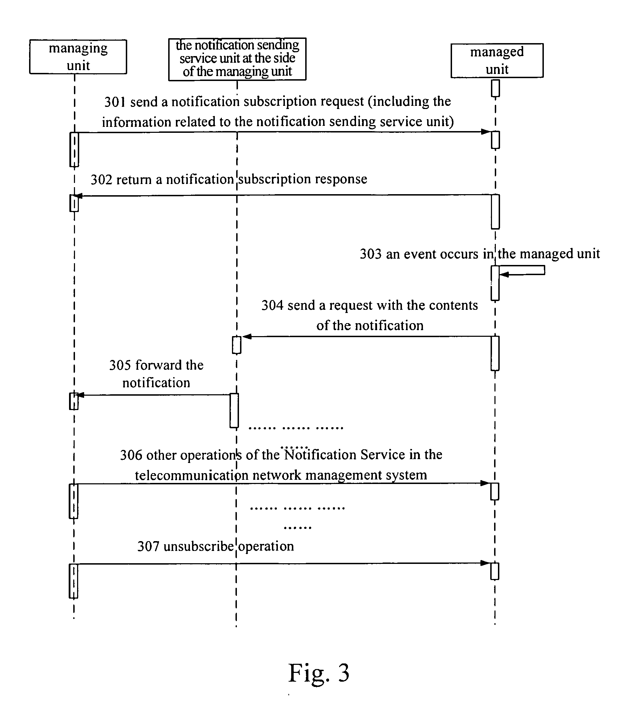

Figure 3 is a flow chart illustrating the implementation of a Notification Service in a WSDL/SOAP- based XML Web Service distributed network management system in accordance with an embodiment of the present invention. As shown in Figure 3, an operating procedure of subscribing for a notification (301 and 302) and an operating procedure of the notification sending service (303 to 305) are mainly included.

In the operating procedure of subscribing for a notification, the managed unit implements the operation of subscribing for a notification in manner of the Request-response communication primitive in the WSDL of the telecommunication network management interface where the managing unit is taken as a client while the managed unit is taken as a server; the managing unit sends a notification subscription request to the managed unit; the managed unit returns to the managing unit a response indicating whether the subscription succeeds. The operation of subscribing for a notification includes the following.

301: The managing unit sends a notification subscription request to the managed unit; the input parameters for the notification subscription request includes at least an identifier of the managing unit, the information regarding the notification sending service unit, features of the notification subscribed (including notification categories and filtering conditions), and a valid subscription term, etc.

The information regarding the notification sending service unit includes at least the identifier of the notification sending service unit and the Web Service description information of the notification sending service (the description information). The Web Service description information may be the identifier of a Web Service description fill, and the Web Service description file identified by the identifier records the detailed description information of the notification sending service, such as service information, port binding information, the WSDL PortType name (referring to a PortType name), the operation list, and port messages, etc.

Optionally, the Web Service description information may directly include: service information, port binding information, the port name, the operation list and port messages.

In the above Web Service description information that is mainly devoted to the WSDL description of the notification sending service, the service information is the information regarding the notification sending service, the port binding information is a transfer protocol (e.g., the HTTP) to which the WSDL PortType is bound, the WSDL PortType name is the name of the port composed of operations included in the notification sending service, the operation list is the list of the operations included in the WSDL PortType. For example, the sending notification operation of the notification sending service, and port messages are operation messages in the transfer protocol and the input and/or output parameters of the operation messages in the transfer protocol. The port messages of sending notification operation in the embodiment mainly include a request with a notification and a response of the request, and the input parameters of the request are the basic contents of the notification. It should be appreciated that a notification sent in practice may be extended on the basis of the basic contents.

302: Upon receiving the notification subscription request, the managed unit records the information contained in the notification subscription request, returns to the managing unit a response indicating whether the subscription succeeds (refer to the existing technical solutions of telecommunication network management interface for the method for verifying whether a subscription succeeds). For a successful subscription, the response carries at least an identifier of subscription information, and the contents identified by the identifier of subscription information include at least an identifier of the managing unit sent the current subscription request, a name of the Notification Service, features of the notification subscribed, the valid term of this subscription and the time for which the subscription has been stored, and the above information regarding the notification sending service unit.

In the operating procedure of the notification sending service, the managed unit sends the notification to the notification sending service unit in manner of the WSDL Request-response communication primitive, and the notification sending service unit forwards the notification to the managing unit through an internal interface on the side of the managing unit. In manner of the WSDL Request-response communication primitive, the managed unit is taken as a client while the notification sending service unit is taken as a server. The managed unit sends a request carrying the notification for which the managing unit has subscribed, to the notification sending service unit; the notification sending service unit extracts the notification upon receiving the request and sends a response to the managed unit.

Optionally, the managed unit may send the notification to the notification sending service unit in manner of the WSDL One-way communication primitive, and the notification sending service unit forwards the notification to the managing unit through an internal interface on the side of the managing unit. In manner of the WSDL One-way communication primitive, the managed unit is taken as a client while the notification sending service unit is taken as a server; The managed unit sends a One-way message carrying the notification for which the managing unit has subscribed, to the notification sending service unit, and the notification sending service unit extracts the notification upon receiving the One-way message.

The notification sending service in the embodiment will be described by taking manner of the WSDL Request-response communication primitive as an example. The operations of the notification sending service include the following.

303: If an event occurs in the managed unit and the managed unit needs to send the notification to the managing unit which has subscribed to the managed unit for the notification, the managed unit inquires the subscription information of the managing unit and determines the information regarding the notification sending service unit corresponding to the managing unit, such as the identifier of the notification sending service and the Web Service description information. If the Web Service description information is the identifier of a service description file, the managed unit accesses the service description file according to the identifier of the service description file; reads the detailed Web Service description information included in the service description file, such as service information, interface binding information, the port name, the operation list and port messages; and determines the specific operation information for sending the notification according to the Web Service description information read; if the Web Service description information is the detailed Web Service description information, the managed unit directly determines the specific operation information for sending the notification according to the Web Service description information.

The operation performed by the managed unit is a sending notification operation, and the managed unit determines, according to the above detailed Web Service description information, the specific operation information for sending the notification, such as interface binding information, port information, to acquire the transfer protocol (e.g., the HTTP) and the message (the port message in the operation is a request with the contents of the notification) to be used to perform the operation.

304: The managed unit sends a request carrying the contents of the notification subscribed by the managing unit to the notification sending service unit on the side of the managing unit according to the identifier of the notification sending service unit, in whicn the contents of the notification are the input parameters of the request. Herein, the managed unit is taken as the client while the notification sending service unit is taken as the server. The notification sending service unit returns a response to the managed unit upon receiving the request from the managed unit.

305: The notification sending service unit extracts the contents of the notification from the request received and forwards the notification to the managing unit through the internal interface on the side of the managing unit. It is obvious that no response will be returned if the One-way communication primitive is adopted.

306: The managing unit may manage subscriptions by using other operations of the Notification Service in the telecommunication network management system. The manner of the WSDL Request-response communication primitive may be used, and the managing unit may be taken as the client while the managed unit may be taken as the server, which are similar to the above subscription operation.

The management operations of the Notification Service in the telecommunication network management system include: subscribe, unsubscribe, getSubscriptionIds, getSubscriptionStatus, changSubscriptionFilter, suspendSubscription, resumeSubscription, and getNotificationCategories etc. Among these operations, the subscribe operation in the WSDL/SOAP-based technical solution in accordance with the embodiments of the present invention is different from that in other technical solutions, and specifically, the identifier of the notification sending service unit transferring the notification practically and the Web Service description information need to be included in the input parameters of the request of the subscription operation; the implementation of the other management operations of the Notification Service is the same as or similar to that in the existing telecommunication network management interface in the CORBA distributed network management system and thus those skilled in the art may implement these management operations of the Notification Service according to the existing art.

307: If the above notification for which the managing unit has subscribed is not necessary for the managing unit any longer, the managing unit may use the unsubscribe operation of the Notification Service in the telecommunication network management system to inform the managed unit, and the managing unit will not receive the above notification subscribed but not needed any longer by the managing unit. The operation in 307 may be performed in manner of the WSDL Request-response communication primitive, and the managing unit is taken as the client while the managed unit is taken as the server.

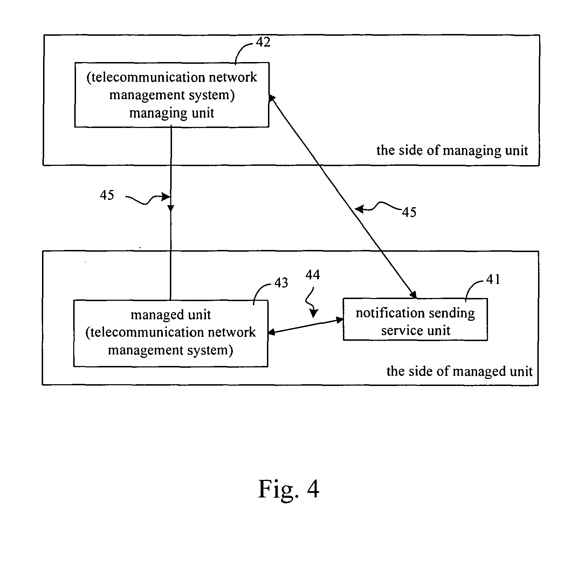

Figure 4 is a diagram illustrating the architecture of a WSDL/SOAP-based XML Web Service distributed network management system in accordance with another embodiment of the present invention. As shown in Figure 4, the XML Web Service distributed network management system includes a managing unit 42 and a managed unit 43, and a notification sending service unit 41 located on the side of or inside the managed unit 43 is set. The functions of the notification sending service unit 41 are the same as the functions of the notification sending service unit in the embodiment above, and the notification sending service unit 41 differs from the notification sending service unit in the embodiment above only in the connection manner with the managing unit 42 and the managed unit 43. The interface between the managed unit 43 and the notification sending service unit 41 is an internal interface 44 on the side of or inside the managed unit 43, any private interface understandable to those skilled in the art may be taken as the internal interface 44; the interface between the managing unit 43 and the notification sending service unit 41 is a telecommunication network management interface 45, and the interface 45 in this embodiment is an improved one according to the existing interface, specifically, the interface 45 is a WSDL/SOAP interface performing communication by the binding extension method of the WSDL Request-response communication primitive. In this embodiment, the managed unit 43 needs to send information regarding the notification sending service unit 41 to the managing unit 42. The contents of the related information are the same as those in the embodiment above and no more description herein. The method of informing the managed unit and the managing unit about the information regarding the notification sending service unit includes: setting the information regarding the notification sending service unit 41 in the managed unit 43, and during the process of subscribing to the managed unit for a notification, upon receiving a notification subscription request from the managing unit 42, the managed unit 43 carries the information regarding the notification sending service unit 41 in a notification subscription response returned to the managing unit 42 to send the information regarding the notification sending service unit 41 to the managing unit 42.

The description information of the notification sending service, i.e., the description information of a WSDL description file, needs to be set in advance in this embodiment. During information interaction, both communicating sides verify, according to the description information of the WSDL description file, whether interaction information is valid. The description information of the notification sending service is the same as that in the embodiment above and no more description herein.

In this embodiment, one or more notification sending service unit 41 may be set; and one or more service interfaces may be provided by each notification sending service unit 41. Each interface may be connected to one managed unit or one managing unit for communication.

The XML Web Service distributed network management system in accordance with this embodiment is applicable to the Notification Service in the pull mode. The managing unit 42 initially sends a request for a notification to the notification sending service unit 41 according to the service port address of the notification sending service unit 41; the notification sending service unit 41 acquires the notification requested by the managing unit 42 from the managed unit 43 through the internal interface 44, and sends the notification acquired as the contents of a response to the managing unit 42.

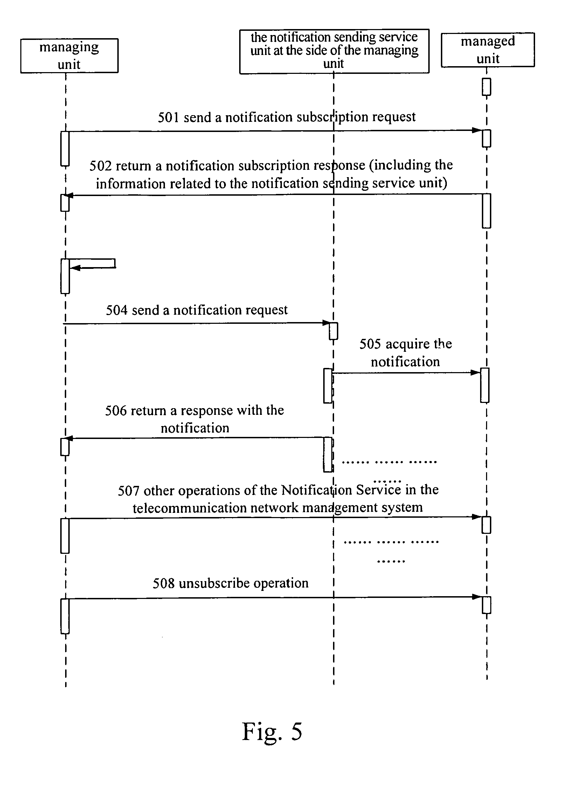

Figure 5 is a flow chart illustrating the implementation of a Notification Service in a WSDL/SOAP-based XML Web Service distributed network management system in accordance with an embodiment. As shown in Figure 5, an operating procedure of subscribing for a notification (501 and 502) and an operating procedure of the notification sending service (503 to 506) are mainly included.

In the operating procedure for subscribing for a notification, the managed unit implements the subscribe operation in manner of the Request-response communication primitive in the WSDL of the telecommunication network management interface, and the managing unit is taken as a client while the managed unit is taken as a server; the managing unit sends a notification subscription request to the managed unit; the managed unit returns a response indicating whether the subscription is successful to the managing unit. The operation of subscribing for a notification includes the following.

501: The managing unit sends a notification subscription request to the managed unit, and the input parameters of the request include at least the identifier of the managing unit, the features of the notification subscribed to (including notification categories and filtering conditions), and the valid subscription term.

502: Upon receiving the notification subscription request, the managed unit records the information carried in the request, returns to the managing unit a response indicating whether the subscription succeeds (please refer to the existing technical solutions of telecommunication network management interface using the WSDL/SOAP for the verification method of whether a subscription succeeds). For a successful subscription, the response carries at least the identifier of subscription information, and the contents identified by the identifier includes at least the identifier of the managing unit sent the current subscription request, the name of the Notification Service, the features of the notification subscribed to, the valid term of this subscription and the time for which the subscription has been stored.

The notification description response also needs to carry the information regarding the notification sending service unit to send the information regarding the notification sending service unit to the managing unit, and the managing unit records the information regarding the notification sending service unit upon receiving the response.

The information regarding the notification sending service unit includes at least: the service port address and the Web Service description information of the notification sending service. The Web Service description information may be the identifier of a Web Service description file, and the Web Service description file identified by the identifier saves the detailed description information of the notification sending service, such as: service information, interface binding information, a port name, an operation list, and port messages.

Optionally, the Web Service description information may directly include: service information, interface binding information, the port name, an operation list and port messages.

The Web Service description information of the notification sending service in accordance with this embodiment mainly performs the WSDL describing for the operations of the notification sending service: the port messages of the sending notification operation mainly include a notification request and a response with the contents of the notification corresponding to the notification request, the input parameter of the request is the identifier of the description information, and the response (i.e., the output parameter) carries the basic contents of the notification acquired. It should be appreciated that the contents of a notification sent in practice may be extended on the basis of the basic contents.

In the operating procedure of the notification sending service, the managing unit sends a notification request to the notification sending service unit in manner of the WSDL Request-response communication primitive, and the notification sending service unit acquires the notification subscribed by the managing unit from the managed unit through the internal interface on the side of the managed unit and forwards the notification as the contents of a response to the managing unit. In manner of the WSDL Request-response communication primitive, the managing unit is taken as the client while the notification sending service unit is taken as the server; the managing unit sends a request carrying the identifier of the description information to the notification sending service unit, and upon receiving the request, the notification sending service unit extracts the identifier of the description information from the request, inquires the contents of the subscription information according to the identifier of the description information, acquires the notification subscribed by the managing unit from the managed unit according to the contents of the subscription information, and returns the notification acquired as the contents of the response to the managing unit. The operations of the notification sending service include the following.

503: If the managing unit needs to acquire the notification, the managing unit inquires the recorded information regarding the notification sending service unit to determine the port address of the notification sending service unit and the Web Service description information. If the Web Service description information is an identifier of a service description file, the managed unit accesses the service description file according to the identifier of the service description file, reads the detailed Web Service description information included in the file, and determines, according to the read Web Service description information, the specific information for the sending notification operation; if the Web Service description information is detailed Web Service description information, the managed unit directly determines, according to the Web Service description information, the specific information for the sending notification operation.

The operation performed by the managed unit is a sending notification operation, and the managed unit determines, from the above detailed Web Service description information, the specific information for the sending notification operation such as interface binding information, port information. In other words, the managed unit acquires the transfer protocol (e.g., the HTTP) and the message (the port messages in the operation are a notification request with the identifier of the managing unit and a response with the contents of the notification) to be used to perform the operation.

504: The managing unit sends a notification request to the notification sending service unit according to the address of the notification sending service unit, and the notification request includes the identifier of the subscription information. In other words, the input parameter of the notification request is the identifier of the subscription information returned in the subscription operation. Herein, the managing unit is taken as the client and the notification sending service unit is taken as the server.

505: Upon receiving the notification request from the managing unit, the notification sending service unit extracts the identifier of the subscription information, accesses the managed unit through the internal interface on the side of the managed unit, and inquires the notification designated by the description information.

506: The notification sending service unit returns the notification as the contents of a response to the managing unit upon finding the notification, and the managing unit extracts the notification from the response.

507: The managing unit may use other operations of the Notification Service in the telecommunication network management system.

The management operations of the Notification Service in the telecommunication network management system include: subscribe, unsubscribe, getSubscriptionIds, getSubscriptionStatus, changSubscriptionFilter, suspendSubscription, resumeSubscription, and getNotificationCategories. The implementation methods of all these management operations of the Notification Service are the same as or similar to those in the existing telecommunication network management interface in the CORBA distributed network management system and thus those skilled in the art may implement the management operations of the Notification Service according to the existing art.

508: If notification subscribed above is not needed by the managing unit any longer, the managing unit may use the unsubscribe operation of the Notification Service in the telecommunication network management system to inform the managed unit, and the managing unit will not receive the above notification subscribed by the managing unit but not needed any longer.

The above are only preferred embodiments of the present invention. The protection scope of the present invention, however, is not limited to the above description. Any change or substitution, within the technical scope disclosed by the present invention, easily occurring to those skilled in the art should be covered by the protection scope of the present invention.

## Claims

1. A method for implementing a Notification Service, applied to a distributed network management system managing telecommunication network management system by Web Service, comprising:
setting a notification sending service unit in a distributed network management system;
informing a managing unit and a managed unit in the distributed network management system about information regarding the notification sending service unit;
subscribing, by the managing unit, to the managed unit for a notification;
sending, by the managed unit, the notification to the managing unit through the notification sending service unit according to the information regarding the notification sending service unit.

2. The method of claim 1, wherein the setting and informing comprises:
setting the notification sending service unit on the side of or inside the managing unit in the distributed network management system; and setting the information regarding the notification sending service unit in the managing unit; and
sending, by the managing unit, a notification subscription request carrying the information regarding the notification sending service unit to the managed unit during the subscribing.

3. The method of claim 2, wherein the sending by the managed unit the notification to the managing unit through the notification sending service unit comprises:
sending, by the managed unit, the notification to the notification sending service unit in manner of a WSDL Request-response communication primitive; and
forwarding, by the notification sending service unit, the notification to the managing unit through an internal interface on the side of or inside the managing unit.

4. The method of claim 3, wherein the sending by the managed unit the notification to the notification sending service unit in manner of the WSDL Request-response communication primitive comprises:
in manner of the WSDL Request-response communication primitive taking the managed unit as a client and taking the notification sending service unit as a server;
sending, by the managed unit, a request carrying the notification to the notification sending service unit according to the information regarding the notification sending service unit; and
extracting, by the notification sending service unit, the notification from the request, and returning a response to the managed unit.

5. The method of claim 2, wherein the sending by the managed unit the notification to the managing unit through the notification sending service unit comprises:
sending, by the managed unit, the notification to the notification sending service unit in manner of a WSDL One-way communication primitive; and
forwarding, by the notification sending service unit, the notification to the managing unit through an internal interface on the side of or inside the managing unit.

6. The method of claim 5, wherein the sending by the managed unit the notification to the notification sending service unit in manner of the WSDL One-way communication primitive comprises:
in manner of the WSDL One-way communication primitive, taking the managed unit as a client and taking the notification sending service unit as a server;
sending, by the managed unit, a One-way message carrying the notification to the notification sending service unit according to the information regarding the notification sending service unit; and
extracting, by the notification sending service unit, the notification from the One-way message.

7. The method of claim 1, wherein setting and informing comprises:
setting the notification sending service unit on the side of or inside the managed unit in the distributed network management system; and setting the information regarding the notification sending service unit in the managed unit; and
sending, by the managed unit, upon receiving a notification subscription request from the managing unit, a notification subscription response carrying the information regarding the notification sending service unit to the managing unit.

8. The method of claim 7, wherein the sending by the managed unit the notification to the managing unit through the notification sending service unit comprises:
acquiring, by the notification sending service unit, the notification from the managed unit through an internal interface on the side of or inside the managed unit; and
acquiring, by the managing unit, the notification from the notification sending service unit in manner of the WSDL Request-response communication primitive.

9. The method of claim 8, wherein the acquiring by the managing unit the notification from the notification sending service unit in manner of the WSDL Request-response communication primitive comprises:
in manner of the WSDL Request-response communication primitive, taking the managing unit as a client and taking the notification sending service unit as a server;
sending, by the managing unit, a notification request to the notification sending service unit according to the information regarding the notification sending service unit; and
returning, by the notification sending service unit, the notification acquired from the managed unit as the contents of a response to the managing unit.

10. The method of claim 1, wherein the information regarding the notification sending service unit comprises:
an identifier of the notification sending service unit and an identifier of a Web Service description file of the notification sending service; and
finding and accessing, by the managed unit, the Web Service description file according to the identifier of the Web Service description file, and acquiring Web Service description information from the Web Service description file.

11. The method of claim 1, wherein the information regarding the notification sending service unit comprises:
an identifier of the notification sending service unit and description information of the notification sending service unit.

12. The method of claim 10 or 11, wherein the identifier of the notification sending service unit comprises:
a port address of the notification sending service.

13. A distributed network management system, managing telecommunication network management system by Web Service plane, comprising: at least one managing unit, at least one managed unit, wherein the managing unit and the managed unit communicate with each other via a telecommunication network management interface, the distributed network management system further comprising:
at least one notification sending service unit which is set at the side of the managing unit or the side of the managed unit, configured to communicate with the managed unit or the managing unit at the opposite side via the telecommunication network management interface; receive a notification sent by the managed unit; forward the notification to the managing unit subscribing for the notification.

14. The system of claim 13, wherein the notification sending service unit is set on the side of or inside the managing unit; the managed unit sends the notification to the notification sending service unit through the telecommunication network management interface, and the notification sending service unit forwards the notification to the managing unit through an internal interface on the side of or inside the managing unit.

15. The system of claim 14, wherein the telecommunication network management interface between the managed unit and the notification sending service unit is: a telecommunication network management interface communicating in manner of a WSDL Request-response communication primitive.

16. The system of claim 14, wherein the telecommunication network management interface between the managed unit and the notification sending service unit is: a telecommunication network management interface communicating in manner of a WSDL One-way communication primitive.

17. The system of claim 13, wherein the notification sending service unit is set on the side of or inside the managed unit; the managing unit sends a notification request to the notification sending service unit through the telecommunication network management interface, and the notification sending service unit acquires the notification from the managed unit through an internal interface on the side of or inside the managed unit and returns the notification to the managing unit through the telecommunication network management interface.

18. The system of claim 17, wherein the telecommunication network management interface between the managing unit and the notification sending service unit is: a telecommunication network management interface communicating in manner of a WSDL Request-response communication primitive.

19. The system of claim 13, wherein the telecommunication network system comprises one of: a third Generation (3G) telecommunication network system, a Next Generation Network (NGN) telecommunication network system, and a World Interoperability for Microwave Access (WiMAX) telecommunication network system.

20. A notification sending service device, applied to a distributed network management system including at least one managing unit and at least one managed unit, comprising:
a receiving module, configured to receive a notification sent by the managed unit; and
a forwarding module, configured to forward the notification to the managing unit which has subscribed to the managed unit for the notification.
